# EUROPÄISCHE PATENTSCHRIFT

(11) **EP 2 888 073 B1**
(45) Veröffentlichungstag und Bekanntmachung des Hinweises auf die Patenterteilung: **12.07.2017**
(21) Anmeldenummer: 13752598.6
(22) Anmeldetag: 30.07.2013
(51) Int. Cl.: B23K 20/12, B23K 9/08, B29C 65/06

(54) **PRESSSCHWEISSVORRICHTUNG MIT EINEM BERÜHRUNGSLOS MESSENDEN MESSMITTEL ZUR ERFASSUNG DER OBERFLÄCJENBESCHAFFENHEIT, DES RUNDLAUFS UND/ODER DES PLANLAUFS AN EINEM STIRNSEITIGEN SCHWEISSBEREICH**
PRESSURE WELDING DEVICE WITH A MEASURING MEANS, MEASURING IN A CONTACTLESS MANNER, FOR DETECTING THE SURFACE QUALITY, THE TRUE RUNNING AND/OR THE AXIAL RUNOUT IN A FRONT WELDING REGION
DISPOSITIF DE SOUDAGE PAR PRESSION POURVU D'UN MOYEN DE MESURE À FONCTIONNEMENT SANS CONTACT POUR DÉTECTER LA NATURE DE LA SURFACE, SA CONCENTRICITÉ ET/OU SA VOILURE AXIALE DANS UNE ZONE DE SOUDAGE FRONTALE

(30) Priorität: 24.08.2012 DE 202012103219 U
(43) Veröffentlichungstag der Anmeldung: 01.07.2015
(73) Patentinhaber: KUKA Industries GmbH, 86165 Augsburg (DE)
(72) Erfinder: BÜCHLER, Michael, 86179 Augsburg (DE); HONSBERG, Otmar, 82256 Fürstenfeldbruck (DE)
(74) Vertreter: Ernicke, Klaus Stefan
(86) Internationale Anmeldenummer: PCT/EP2013/066017
(87) Internationale Veröffentlichungsnummer: WO 2014/029589

(56) Entgegenhaltungen:
- EP-A1- 0 101 375
- EP-A1- 2 163 338
- DE-A1- 3 713 418
- JP-A- S63 140 785
- JP-A- 2006 297 398

## Beschreibung

Die Erfindung betrifft eine Pressschweißvorrichtung und ein Pressschweißverfahren mit den Merkmalen im Oberbegriff der Ansprüche 1 und 9 (siehe, z.B., EP2 163 338 A1). Aus der DE 299 22 424 U1, der DE 299 22 396 U1 und der EP 2 163 338 A1 ist eine solche Pressschweißvorrichtung in Form einer Reibschweißvorrichtung bekannt. Sie weist eine Plastizierungseinrichtung und eine Staucheinrichtung zur Herstellung einer Schweißverbindung zwischen gepaarten Werkstückteilen auf. Durch stirnseitigen Kontakt und drehendes Reiben unter Druck werden die Werkstückteile an ihren Schweißbereichen plastifiziert und anschließend in einem Stauchhub mit ggf. erhöhter Kraft verbunden. Die Reibschweißvorrichtung weist eine erste um eine Rotationsachse rotierbare Spannvorrichtung mit einem Drehantrieb für ein erstes Werkstückteil und eine zweite Spannvorrichtung für ein zweites Werkstückteil sowie eine Vorschubeinrichtung zur linearen Verstellung der zweiten Spannvorrichtung und zur gegenseitigen Annäherung der Spannvorrichtungen und der Werkstückteile auf.

Die DE 37 13 418 A1 zeigt eine andere Pressschweißvorrichtung zum Schweißen mit einem magnetisch bewegten Lichtbogen. Die zunächst axial distanzierten Werkstückteile werden an den Stirnseiten mit dem umlaufenden Lichtbogen plastifiziert und anschließend in einem Stauchhub verbunden.

Die JP 2006 297398 A offenbart einen Ultraschall-Vibrator zum nachträglichen Abtragen einer Stufe und scharfer Kanten an der Verbindungsstelle des fertig geschweißten Werkstücks. Hierdurch können im Betrieb des Werkstücks auftretende Kerbspannungen gemindert werden.

Aus der JP 63 140785 A ist eine Reibschweißvorrichtung mit einem Temperatursensor an der Verbindungsstelle der Werkstückteile bekannt, der im Prozess die entstehende Reibwärme beim Reiben der Werkstückteile aufnimmt und ein Startsignal für einen Messzähler emittiert.

Die EP 0 101 375 A1 lehrt allgemein ein Verfahren zur berührungslosen Erfassung der Oberflächen-Rauheit eines Werkstücks.

Es ist Aufgabe der vorliegenden Erfindung, eine verbesserte Pressschweißtechnik, insbesondere Reibschweißtechnik, aufzuzeigen.

Die Erfindung löst diese Aufgabe mit den Merkmalen im Anspruch 1 und im Anspruch 9. Die erfindungsgemäße Pressschweiß-, insbesondere Reibschweißtechnik, ermöglicht die Erzielung qualitativ hochwertiger, reproduzierbarer und belastbarer Schweißverbindung. Sie erlaubt es, eine gewisse Mindestgüte der Oberflächenbeschaffenheit und/oder des Plan- und/oder Rundlaufs der Werkstückteile mit Bezug auf die Rotationsachse zu erreichen. Hierdurch kann vermieden werden, dass sich die Werkstückteile ggf. nicht vollflächig berühren und es nur zu einem partiellen und/oder ungleichmäßigen Plastifizieren und damit zur Ausbildung einer minderwertigen Schweißstelle kommt.

Die erfindungsgemäße Pressschweißtechnik kommt mit einem geringen Bau- und Steueraufwand und einer vereinfachten Kinematik aus. Die z.B. ohnehin vorhandene Dreheinrichtung an einer oder an beiden benachbarten Spannvorrichtungen kann für die messtechnische Erfassung der Oberflächenbeschaffenheit und/oder des Plan- und/oder Rundlaufs der zu schweißenden Stirnseite eines oder beider Werkstückteile eingesetzt werden. Eine bevorzugt berührungslose sensorische Erfassung, insbesondere unter Einsatz eines Messstrahls ist besonders genau, einfach und betriebssicher.

Die erfindungsgemäße Pressschweißtechnik gestattet eine automatisierte Prüfung der zu schweißenden Werkstückteile und hiervon beeinflusste automatische Prozessabfolgen. Mängelkorrekturen können innerhalb der Pressschweißvorrichtung durch Lageänderung und/oder Nachbearbeitung eines Werkstückteils behoben werden. Die Pressschweißvorrichtung kann in ihrem Schweißprozess automatisiert werden, was auch eine automatische Be- und Entladung der Werkstückteile bzw. geschweißten Werkstücke sowie ggf. ein Ausschleusen mangelhafter Werkstückteile einschließen kann. Geprüft werden kann ferner auch das fertige Schweißteil, z.B. hinsichtlich des Rundlaufs und/oder Planlaufs des oder der Teilende(n).

Die beanspruchte Pressschweißtechnik betrifft bevorzugt das Reibschweißen mit Plastifizierung der kontaktierenden Werkstückteile und ihrer Stirnflächen unter Druck und umlaufend drehendes oder lineares oder oszillierendes Reiben. Alternativ ist eine Plastifizierung durch einen magnetisch bewegten elektrischen Lichtbogen möglich, der zunächst zwischen den Werkstückteilen gezündet wird und dann unter Magnetfeldeinfluss rotierend umläuft. In beiden Fällen kann sich an die Plastifizierung ein axialer Stauchhub anschließen.

Im Folgenden wird unter dem Begriff "Rotationsachse" jeweils die für die Herstellung einer Press-, insbesondere Reibschweißverbindung vorgesehene Hauptachse verstanden, um die einerseits das erste Werkstückteil rotiert und in deren Richtung andererseits eine lineare Relativbewegung zwischen den Werkstückteilen stattfindet.

Mit einem, insbesondere einem ersten Messmittel kann eine Erfassung der Oberflächenbeschaffenheit und/oder des Plan- und/oder Rundlaufs an dem zweiten Werkstückteil mit Bezug auf die Rotationsachse erfolgen, während das zweite Werkstückteil bereits für die Herstellung der Reibschweißverbindung eingespannt ist, d.h. in der für die Schweißung vorgesehenen Einspannlage. Für die Durchführung einer Messung kann das erste Messmittel, insbesondere durch eine Rotation der ersten Spannvorrichtung, um die Rotationsachse gedreht werden und dabei den Schweißbereich des zweiten Werkstückteils vermessen. Das erste Messmittel ist bevorzugt dauerhaft an der Press- bzw. Reibschweißvorrichtung, insbesondere an der ersten Spannvorrichtung, angeordnet, so dass es nicht für die Durchführung einer Schweißung entfernt werden muss. Hierdurch kann vorteilhafterweise eine Erfasssung der Oberflächenbeschaffenheit und/oder des Grund- und/oder Planlaufs ohne Taktzeitverlust erfolgen.

Das erste Messmittel weist bevorzugt eine separate Energieversorgung auf, die mit dem ersten Messmittel verbunden und ebenfalls um die Rotationsachse drehbar gelagert, insbesondere an der ersten Spannvorrichtung befestigt ist. Durch die Energieversorgung kann das Messmittel während eines Messvorgangs betrieben werden, ohne dass es einer Kabelführung für die Energiezufuhr zwischen dem stationären Maschinengestell und dem rotierbar gelagerten Messmittel bedarf.

Das erste bewegte Messmittel kann ferner über ein drahtloses Datenübertragungsmittel mit einer Steuerung der Reibschweißvorrichtung verbunden sein. Somit kann auch auf eine Kabelführung für die Übertragung von Sensordaten zwischen dem Messmittel und einer Steuerung der Reibschweißvorrichtung verzichtet werden.

Die Press- bzw. Reibschweißvorrichtung weist bevorzugt ein weiteres, insbesondere zweites Messmittel zur Erfassung der Oberflächenbeschaffenheit und/oder des Plan- und/oder Rundlaufs an einem Schweißbereich des ersten Werkstückteils auf, welches in der ersten Spannvorrichtung gehalten ist. Das zweite Messmittel ist bevorzugt in Richtung der Rotationsachse der ersten Spannvorrichtung linear verschieblich gelagert. Es kann insbesondere an der zweiten Spannvorrichtung befestigt sein.

Bei einer Press- bzw. Reibschweißvorrichtung mit einem ersten und einem zweiten Messmittel der oben genannten Art kann vorteilhafter Weise ohne Taktzeitverlust eine Vermessung beider Werkstückteile in einem automatisierten und parallelisierten Prozess erfolgen. Es kann insbesondere eine gleichzeitige Vermessung der beiden Werkstückteile erfolgen, wobei die erste Spannvorrichtung in kontrollierter Weise gedreht wird und für beide Messvorgänge die jeweils erforderliche Relativbewegung zwischen Werkstückteil und Messmittel bewirkt.

In den Unteransprüchen sind vorteilhafte Ausbildungen der Reibschweißvorrichtung angegeben.

In einer Ausgestaltung weist die Pressschweißvorrichtung mehrere Paare von Spannvorrichtungen auf.

Vorteilhaft ist auch eine dauerhafte Anordnung eines Messmittels an der Pressschweißvorrichtung, insbesondere Reibschweißvorrichtung.

Die Pressschweißvorrichtung kann eine Positioniervorrichtung zur Korrektur einer Lage von einem oder mehreren Werkstückteil(en) mit Bezug zur Rotationsachse aufweist. Eine solche Positioniervorrichtung ist vorzugsweise an der zweiten, axial verschieblichen Spannvorrichtung angeordnet und für das zweite Werkstückteil vorgesehen. Die Pressschweißvorrichtung kann alternativ oder zusätzlich eine Nachbearbeitungsvorrichtung für ein Werkstückteil aufweisen. Ferner können die Positioniervorrichtung und/oder die Nachbearbeitungsvorrichtung automatisiert und mit einer Steuerung der Pressschweißvorrichtung verbunden ist/sind.

Die Pressschweißvorrichtung ist bevorzugt dazu vorgesehen und ausgebildet, eine Erfassung einer Oberflächenbeschaffenheit und/oder eines Rundlaufs und/oder eines Planlaufs an einem stirnseitigen Schweißbereich in der für die Herstellung der Pressschweißung vorgesehenen Einspannlage des oder der Werkstückteile durchzuführen.

In einer besonders vorteilhaften Ausgestaltung ist die Pressschweißvorrichtung dazu vorgesehen und ausgebildet ist, eine automatisierte Erfassung einer Oberflächenbeschaffenheit und/oder eines Rundlaufs und/oder eines Planlaufs auszuführen.

Vorzugsweise ist die Pressschweißvorrichtung auch dazu vorgesehen und ausgebildet, eine Erfassung einer Oberflächenbeschaffenheit und/oder eines Rundlaufs und/oder eines Planlaufs direkt vor Beginn einer Pressschweißung auszuführen.

Die Pressschweißvorrichtung kann dazu vorgesehen und ausgebildet sein, eine Pressschweißung nur bei Feststellung einer erforderlichen Güte der Oberflächenbeschaffenheit und/oder des Rundlaufs und/oder des Planlaufs auszuführen.

In einer automatisierten Variante ist die Pressschweißvorrichtung dazu vorgesehen und ausgebildet, anhand der Messergebnisse eines Messmittels eine Korrektur der Lage eine Werkstückteils und/oder eine Nachbearbeitung eines Werkstückteils automatisch auszuführen

Für eine Nachkontrolle kann die Pressschweißvorrichtung und deren Messmittel dazu vorgesehen und ausgebildet sein, das pressgeschweißte Werkstück an ein oder beiden Stirnenden auf Rundlauf und/oder Planlauf zu überprüfen.

Ein weiterer eigenständiger Erfindungsgedanke besteht darin, eine Pressschweißvorrichtung mit einer Plastifizierungseinrichtung und einer Staucheinrichtung sowie Spannvorrichtungen für die Werkstückteile vorzusehen, wobei die Pressschweißvorrichtung ein Messmittel aufweist, das um eine Hauptachse, insbesondere eine zentrale Stauchachse, im Bereich eines ersten Werkstückteils drehbar gelagert ist und zur Erfassung der Oberflächenbeschaffenheit und/oder des Rundlaufs und/oder des Planlaufs an einem stirnseitigen Schweißbereich des gegenüber liegenden zweiten Werkstückteils ausgebildet ist. Dies betrifft auch das zugehörige verfahren.

Die Plastifizierungseinrichtung und die Staucheinrichtung können dabei beliebig ausgebildet sein. Eine oder mehrere der genannten Spannvorrichtungen kann/können um die Hauptachse rotieren. Das Messmittel kann an einer rotierenden Spannvorrichtung angeordnet sein. Es kann alternativ an einer eigenen Rotationsvorrichtung angeordnet sein. Dies kann insbesondere der Fall sein, wenn die Spannvorrichtungen drehfest angeordnet sind.

Das Plastifizieren kann durch Reiben der Werkstückteile unter bevorzugt gegenseitigem Kontakt und Druck, insbesondere axialem Druck oder durch einen umlaufenden und magnetisch bewegten Lichtbogen erfolgen. Im zweitgenannten Fall ist eine gegenseitige Verdrehung der Werkstückteile um die Haupt- oder Stauchachse nicht erforderlich. Hierbei kann das Messmittel eigenständig rotieren.

Die Erfindung ist in den Zeichnungen beispielsweise und schematisch dargestellt. Es zeigen:
- Figur 1:: eine Schemadarstellung einer Reibschweißvorrichtung in Seitenansicht,
- Figuren 2 u. 3:: perspektivische Ansichten auf eine erste und eine zweite Spannvorrichtung mit darin gehaltenen Werkstückteilen und ein erstes Messmittel und
- Figur 4:: eine perspektivische Ansicht einer Reibschweißvorrichtung mit einem ersten und einem zweiten Messmittel.

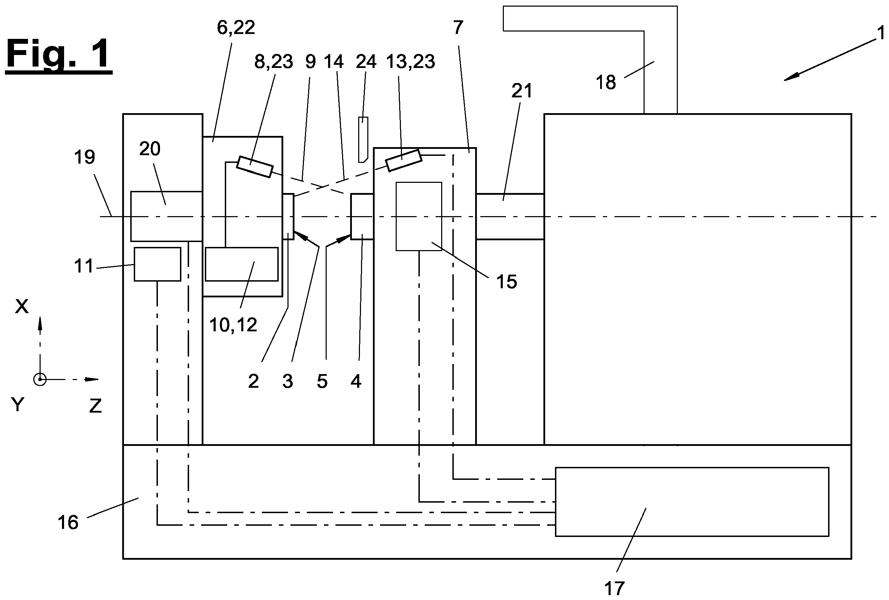

Die Erfindung betrifft eine Pressschweissvorrichtung, bevorzugt eine Reibschweißvorrichtung (1), und ein Verfahren zur Herstellung einer Schweißverbindung zwischen einem ersten Werkstückteil (2) und einem zweiten Werkstückteil (4). Eine solche Reibschweißvorrichtung (1) für zwei Werkstückteile (2,4) ist in Figur 1 schematisch dargestellt. In einer nicht dargestellten Alternative kann die Pressschweissvorrichtung (1) mit einem magnetisch bewegten elektrischen Lichtbogen arbeiten.

Das erste Werkstückteil (2) und das zweite Werkstückteil (4) können aus beliebigen Materialien, insbesondere aus eisenhaltigen oder nicht-eisenhaltigen Metallen oder auch aus nichtmetallischen Werkstoffen bestehen. Die Reibschweißvorrichtung (1) und die damit zu schweißenden Werkstückteile (2,4) können z.B. gemäß der DE 299 22 424 U1, der DE 299 22 396 U1 oder der DE 195 23 240 C1 ausgebildet sein.

Das erste Werkstückteil (2) ist in einer um die Rotationsachse (19) drehbaren und von einem Drehantrieb (20) beaufschlagten Spannvorrichtung (6) gehalten. Der Drehantrieb (20) kann einen steuerbaren Motor und ggf. eine oder mehrere feste oder zuschaltbare Schwungmassen aufweisen. Das zweite Werkstückteil (4) ist in einer zweiten Spannvorrichtung (7) gehalten.

Die zweite Spannvorrichtung (7) ist bevorzugt in Richtung der Rotationsachse (19) linear verschieblich gelagert. Die Spannvorrichtung (7) ist in der gezeigten Ausführungsform drehfest. Sie kann alternativ drehbar sein und ebenfalls einen steuerbaren Drehtrieb aufweisen.

Die Rotationsachse (19) und die Verschiebeachse sind z.B. horizontal ausgerichtet und erstrecken sich längs der Maschinenachse (Z).

Die Spannvorrichtungen (6,7) haben einen Stellantrieb und können automatisch geöffnet und geschlossen werden. Sie nehmen jeweils ein einzelnes Werkstückteil (2,4) zentral auf. Die sog. erste und drehend angetriebene Spannvorrichtung (6) kann z.B. als Spannfutter mit einem Grundkörper (22) und mehreren, z.B. drei radial zur Zentralachse (19) zustellbaren Spannbacken (nicht dargestellt) ausgebildet sein. Die zweite Spannvorrichtung (7) kann z.B. als sog. Zentrumspanner mit einem Gestell zwei zustellbaren Spannbacken ausgeführt sein.

Die Werkstückteile (2,4) können eine beliebige Form haben und besitzen jeweils einen stirnseitigen, rohrförmigen oder vollflächigen Schweißbereich (3,5), an dem die Plastifizierung und die Schweißverbindung erfolgen. Der Schweißbereich (3,5) des ersten und/oder zweiten Werkstückteils (2,4) hat bevorzugt rotationssymmetrische Kontur, insbesondere in Form einer Kreisringfläche oder einer Vollkreisfläche. Ein stirnseitiger Schweißbereich (3,5) ist bevorzugt symmetrisch, insbesondere konzentrisch, und senkrecht zur Rotationsachse (19) ausgerichtet. Eine Zentrallinie eines Schweißbereichs (3,5) (vorgesehenes Zentrum einer Schweißverbindung) ist bevorzugt kreisringförmig ausgebildet und derart ausgerichtet, dass der Mittelpunkt der Zentrallinie mit der Rotationsachse (19) zusammenfällt. Die Werkstückteile (2,4) sind in den Ausführungsbeispielen mit den Zentralachsen ihrer Stirnflächen bzw. Schweißbereiche (3,5) für den Schweißprozess gleichachsig und fluchtend ausgerichtet.

Alternativ ist eine nicht-rotationssymmetrische, z.B. elliptische oder prismatische Form der Stirnfläche bzw. des Schweißbereichs (3,5) möglich, insbesondere beim Schweißen mit einem magnetisch bewegten Lichtbogen. Die Stirnfläche bzw. der Schweißbereich (3,5) können konisch ausgebildet und schräg zur Rotationsachse (19) ausgerichtet sein.

Die Reibschweißvorrichtung (1) weist ein Maschinengestell (16) auf, an dem die erste Spannvorrichtung (6) und die zweite Spannvorrichtung (7) angeordnet und gelagert sind. Die Spannvorrichtung(en) (6,7) können ggf. mittels einer Wechseleinrichtung austauschbar angeordnet sein. Das Maschinengestell (16) kann z.B. ein liegendes Maschinenbett und einen aufrechten Maschinenständer aufweisen. An dem Maschinengestell (16) können der Drehantrieb (20), die Antriebe für die Spannvorrichtungen (6,7) sowie eine Steuerung (17) der Reibschweißvorrichtung (1) angeordnet sein.

An der Reibschweißvorrichtung (1) gemäß Figur 1 ist ein sog. erstes Messmittel (8) im Bereich der ersten Spannvorrichtung (6) angeordnet. Es kann insbesondere an der Spannvorrichtung (6), bevorzugt an deren Grundkörper (22) front- oder umfangseitig sowie fest oder verstellbar montiert sein. Es kann ggf. in die Spannvorrichtung (6) integriert sein. Das erste Messmittel (8) ist bevorzugt zur berührungslosen Erfassung eines stirnseitigen Schweißbereichs (5) des zweiten Werkstückteils (4) ausgebildet.

Das erste Messmittel (8) weist mindestens einen Sensor (23) und eine Auswertung für dessen Signale auf. Der Sensor (23) erfasst die Oberflächenbeschaffenheit und/oder den Planlauf und/oder den Rundlauf des Schweißbereichs (5) des zweiten Werkstückteils (4). Dies kann z.B. durch eine Abstandsmessung zwischen dem Sensor (23) und der Stirnseite des zweiten Werkstückteils (4) erfolgen. Der Sensor (23) kann auch einen Messstrahl (9), insbesondere einen Laserstrahl, auf die Stirnseite bzw. den Schweißbereich (5) des zweiten Werkstückteils (4) richten. Die Strahlausrichtung kann schräg zur Drehachse (19) sein. Der Sensor (23) kann hierbei z.B. als Lichttaster ausgebildet sein. Die Abstandsmessung kann durch Messung der von der Schweißstelle (5) reflektierten Lichtanteile erfolgen, z.B. anhand einer Laufzeit- oder Intensitätsmessung. Eine Abstandmessung kann auch auf andere Weise, z.B. kapazitiv oder induktiv oder optisch, erfolgen.

Die besagte sensorische Erfassung der Oberflächenbeschaffenheit und/oder des Planlaufs und/oder des Rundlaufs der Stirnfläche kann ferner statt durch Abstandsmessung auf andere Weise, z.B. durch optische Kontrastmessung oder dgl. erfolgen. Der ggf. auch hierfür eingesetzte Strahl (9) kann ein Lichtstrahl sein und der Beleuchtung der Erfassungsstelle am Werkstückteil (2) dienen.

Das Messmittel (8) kann mehrere gleich oder unterschiedlich ausgebildete Sensoren (23) aufweisen, die verteilt rund um die Drehachse (19) angeordnet sind. Der oder die Sensor(en) (23) können starr oder verstellbar an der Spannvorrichtung (6) angeordnet sein. Ferner ist eine in sich verstellbare Sensorausbildung möglich. Der Sensor (23) kann z.B. einen beweglichen, insbesondere oszillierend schwenkbaren Strahl (9), insbesondere Messstrahl, emittieren.

Das erste Messmittel (8) verfügt bevorzugt über eine separate Energieversorgung (12), die autark und mitbewegt sein kann. Die Energieversorgung (12) kann beliebig ausgebildet sein. Sie kann insbesondere eine Batterie oder ein Akkumulator aufweisen. Alternativ kann die Energieversorgung (12) ein Energieübertragungsmittel sein, über das kontaktierend, z.B. Schleifring, oder berührungslos eine Versorgungsenergie vom Maschinengestell (16) zu dem rotierbaren Messmittel (8) übertragen wird. Die berührungslose Energieübertragung kann beispielsweise kapazitiv oder induktiv erfolgen. Die separate Energieversorgung (12) ist um die Rotationsachse (19) drehbar gelagert. Sie kann insbesondere an der ersten Spannvorrichtung (6) angeordnet sein.

Das erste Messmittel (8) weist bevorzugt ein Mittel (10) zur drahtlosen Datenübertragung zwischen dem Messmittel (8) und der Steuerung (17) auf. Das drahtlose Datenübertragungsmittel (10) kann beispielsweise als Funkmodul ausgebildet sein und mit einem korrespondierenden Datenübertragungsmittel (11) am Maschinengestell (16) zusammenwirken.

Alternativ kann eine beliebige andere Form der drahtlosen Datenübertragung vorliegen, beispielsweise durch kapazitive oder induktive Kopplung oder durch Informationsübertragung per Lichtimpuls. Auch eine leitungsgebundene Datenübertragung mit Drehübertrager ist möglich.

Es ist bevorzugt vorgesehen, dass das erste Messmittel (8) sowie die Energieversorgung (12) und das rotierbar gelagerte Datenübertragungsmittel (10) dauerhaft an der ersten Spannvorrichtung (6) verbleiben. Ferner kann die Messung der Oberflächenbeschaffenheit und/oder des Rund- und/oder Planlaufs weitgehend frei von Umgebungs- und Störeinflüssen erfolgen. Somit kann durch das erste Messmittel (8) eine besonders exakte und schnelle Vermessung ausgeführt werden.

Die Reibschweißvorrichtung (1) gemäß Figur 1 weist bevorzugt ein zweites Messmittel (13) auf. Dieses kann ebenfalls zur berührungslosen Vermessung ausgebildet und bevorzugt dauerhaft an der Reibschweißvorrichtung (1) angeordnet sein. Das zweite Messmittel (13) kann beliebig, vorzugsweise gleich wie das erste Messmittel (8), ausgebildet sein und einen oder mehrere Sensoren (23), insbesondere einen Lichttaster, aufweisen. Es kann ebenfalls einen Messstrahl (14), insbesondere Laserstrahl, auf die Stirnfläche und den Schweißbereich (3) des ersten Werkstückteils (2) emittieren. Das zweite Messmittel (13) kann auch verstellbar ausgebildet und/oder angeordnet sein.

Die zweite Spannvorrichtung (7) ist bevorzugt in Richtung der Rotationsachse (19) verschieblich gelagert. Sie bildet somit bevorzugt den Druckerzeuger für die Plastifizierungs- und Staucheinrichtung. Alternativ kann die zweite Spannvorrichtung (7) fest angeordnet sein, während eine Verschiebbarkeit der ersten Spannvorrichtung (6) oder beider Spannvorrichtungen vorgesehen ist.

Für diese verschiebliche Relativbewegung der Spannvorrichtung(en) (6,7) ist eine steuerbare Vorschubeinrichtung (21) vorgesehen. Dies kann z.B. als Hydraulikeinheit, insbesondere als hydraulischer Zylinder, ausgebildet sein und kann sich z.B. am Maschinengestell abstützen.

Die Reibschweißvorrichtung (1) weist bevorzugt eine an der zweiten Spannvorrichtung (7) angeordnete Positioniervorrichtung (15) zur Korrektur einer Lage des zweiten Werkstückteils (4) mit Bezug zur Rotationsachse (19) auf. Die Positioniervorrichtung (15) kann eine Korrektur in Richtung einer ersten Maschinen-Radialachse (X) und/oder in Richtung einer zweiten Maschinen-Radialachse (Y) hervorrufen. Die erste Radialachse (X) entspricht z.B. der Hochachse der Reibschweißvorrichtung (1), während die zweite Radialachse (Y) bevorzugt der Horizontalachse der Reibschweißvorrichtung (1) entspricht.

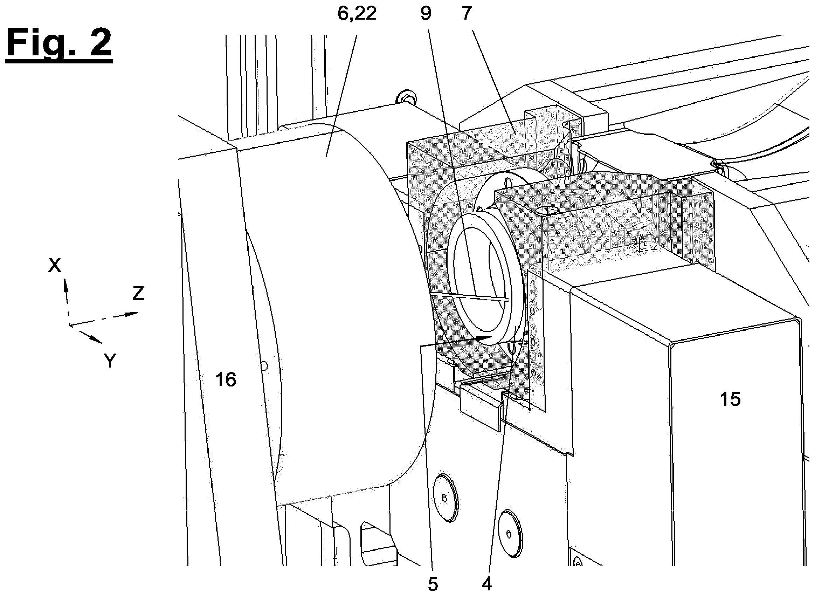

Figur 2 zeigt einen Ausschnitt der Reibschweißvorrichtung (1) in perspektivischer Darstellung. Auf der linken Seite befindet sich die erste rotierbar gelagerte Spannvorrichtung (6). In dieser ist (nicht sichtbar) ein erstes Werkstückteil (2) gehalten. Ferner ist in der ersten Spannvorrichtung (6) das erste Messmittel (8) integriert, welches einen schrägen und ggf. in der Neigung einstellbaren Messstrahl (9) aussendet.

Der Messstrahl (9) ist auf die Stirnfläche und den Schweißbereich (5) des zweiten Werkstückteils (4) gerichtet. Der Sensor (23) und ggf. der Messstrahl (9) tasten die Stirnfläche berührungslos ab.

Hierbei kann festgestellt werden, ob die Stirnfläche eben ist oder nicht und welche Materialeigenschaften sie ggf. hat (Einschlüsse, Poren, Risse etc.). Alternativ oder zusätzlich kann erfasst werden, in welchem Winkel die Stirnfläche zur Drehachse (19) bzw. Verschiebeachse ausgerichtet ist. Die Vorgabe ist z.B. ein rechter Winkel. Ferner kann ein evtl. Seitenversatz bzw. eine Exzentrizität gegenüber der Drehachse (19) bzw. Verschiebeachse detektiert werden. Alle diese detektierten Faktoren können Einfluss auf den Schweißprozess und die Prozessqualität haben. Für die zulässige Güte der Oberflächenbeschaffenheit und/oder des Plan- und/oder Rundlaufs können Grenzwerte vorgegeben sein. Die Soll- und Ist-Werte können mit Werkstückbezug gespeichert und zur Qualitätssicherung protokolliert sowie in geeigneter Weise ausgegeben werden. Die Steuerung (17) kann hierfür eine geeignete Auswertung nebst Speichern und Schnittstellen aufweisen.

Eine Erfassung der Oberflächenbeschaffenheit und/oder des Plan- und/oder Rundlaufs an dem zweiten Werkstückteil (4) erfolgt bevorzugt durch eine drehende Bewegung des ersten Messmittels (8) um die Rotationsachse (19), während das zweite Werkstückteil (4) in Ruhe ist. Hierdurch wird die Stirnfläche über die gesamte Umfangslänge abgetastet. Ferner kann ggf. die volle Breite der Stirnfläche durch einen dicken oder einen radial oszillierenden Messstrahl (9) abgetastet werden. Es ist insbesondere bevorzugt vorgesehen, dass das erste Messmittel (8) derart ausgerichtet ist, dass es den Schweißbereich (5) vermisst, während das zweite Werkstückteil (4) in der für die Herstellung der Reibschweißverbindung vorgesehenen Ausgangslage (Vor Ausführung des Vorschubs zum Anpressen der beiden Werkstückteile) eingespannt ist.

Wird bei der Erfassung der Oberflächenbeschaffenheit und/oder des Plan- und/oder Rundlaufs an dem zweiten Werkstückteil (4) festgestellt, dass dessen Güte eine vorgegebene Güte unterschreitet, kann durch eine Positioniervorrichtung (15) eine Achskorrektur erfolgen. Die Achskorrektur kann insbesondere automatisch in Abhängigkeit der Messergebnisse erfolgen, die durch das erste Messmittel (8) erfasst wurden. Die Positioniervorrichtung (15) und die Korrektur können einachsig oder mehrachsig sein. Bei Material- oder Oberflächenfehlern der Stirnfläche bzw. des Schweißbereichs (3,5) kann auch eine Nachbearbeitung stattfinden.

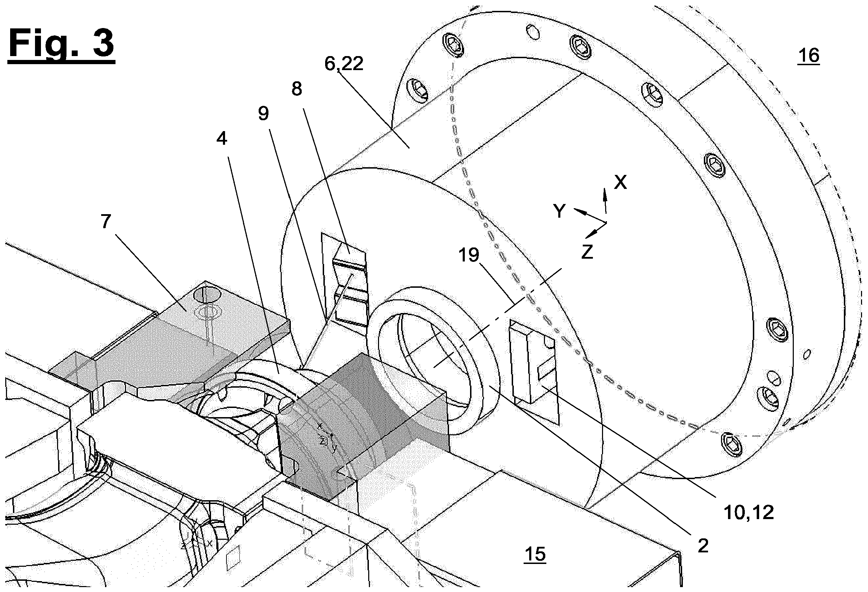

Figur 3 zeigt die Reibschweißvorrichtung (1) aus Figur 1 mit Blick auf die erste Spannvorrichtung (6) und das darin eingespannte erste Werkstückteil (2). Das erste Messmittel (8) kann bevorzugt derart in die erste Spannvorrichtung (6) integriert sein, dass der von dem Messmittel (8) ausgesendete Messstrahl (9) auf das zweite Werkstückteil (4) ausgesendet wird, ohne dass der Messstrahl (9) durch das eingespannte erste Werkstückteil (2) behindert wird. Das erste Messmittel (8) kann insbesondere in Richtung einer Radialachse (X,Y) außerhalb des ersten Werkstückteils (2) angeordnet sein. Es ist bevorzugt vorgesehen, dass eine Energieversorgung (12) und/oder ein an der Spannvorrichtung (6) angeordnetes Senderteil (10) des Datenübertragungsmittels derart positioniert und befestigt sind, dass diese mit Bezug zu der Rotationsachse (Z) einen Momentenausgleich gegenüber dem ersten Messmittel (8) bewirken.

Das erste Messmittel (8) ist bevorzugt an oder in einer zu dem zweiten Werkstückteil (4) weisenden Stirnseite der ersten Spannvorrichtung (6) angeordnet. Alternativ kann das erste Messmittel (8) an einer radialen Außenseite der ersten Spannvorrichtung (6) angeordnet sein. Das erste Messmittel (8) ist in Richtung der Rotationsachse (Z) bevorzugt hinter der Stirnseite (Schweißbereich (3)) des ersten Werkstückteils (2) und insbesondere hinter der Stirnseite der ersten Spannvorrichtung (6) zurückversetzt angeordnet. D.h. wenn das erste und das zweite Werkstückteil (2,4) in der für die Herstellung der Schweißverbindung vorgesehenen Ausgangslage (vor Ausführung des Vorschubs) eingespannt sind, ist der Abstand zwischen dem ersten Messmittel (8) und dem Schweißbereich (5) des zweiten Werkstückteils (4) in Richtung der Rotationsachse (19) größer, als der Abstand zwischen den Werkstückteilen (2,4). Hierdurch kann das erste Messmittel (8) auch während einer Durchführung der Reibschweißung an der angegebenen Position verbleiben. Eine Kollision zwischen dem ersten Messmittel (8) und dem zweiten Werkstückteil (2) ist ausgeschlossen.

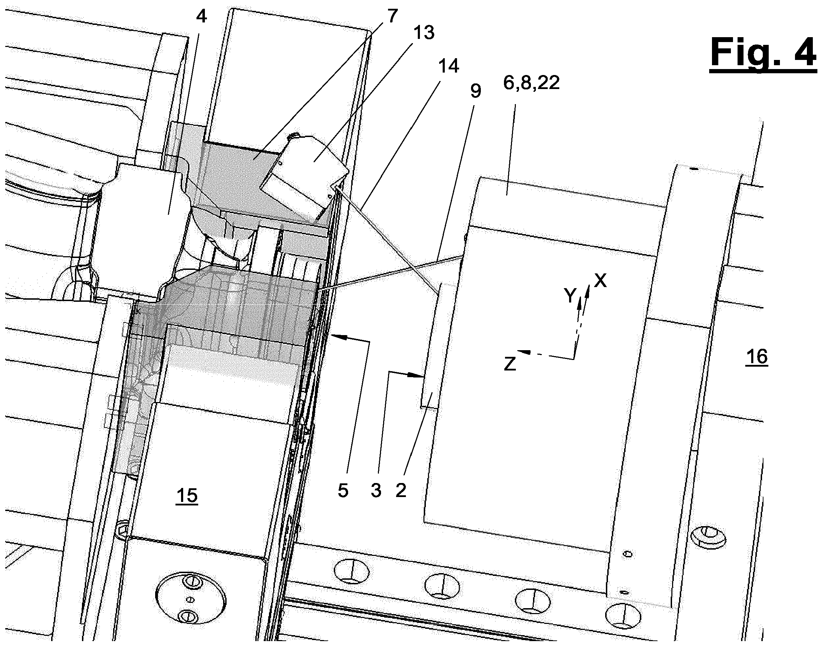

Figur 4 zeigt eine Reibschweißvorrichtung (1), bei der ein erstes Messmittel (8) sowie ein zweites Messmittel (13) vorgesehen sind. Das erste Messmittel (8) sowie dessen Anordnung können den vorgenannten Beschreibungen zu Figuren 1 bis 3 entsprechen. Alternativ kann das erste Messmittel (8) anders ausgebildet und/oder angeordnet sein.

Das zweite Messmittel (13) ist bevorzugt im Bereich der zweiten Spannvorrichtung (7) angeordnet. Alternativ kann das zweite Messmittel (13) auf der Seite des zweiten Werkstückteils (4) an einem Teil des Maschinengestells (16) oder an einer Positioniervorrichtung (15) angeordnet sein. Das zweite Messmittel (13) ist bevorzugt derart angeordnet, dass es einen Messstrahl (14) auf den stirnseitigen Schweißbereich (3) des ersten Werkstückteils (2) emittieren kann, wobei dieser Messstrahl (14) nicht durch das zweite Werkstückteil (4) behindert wird. Das zweite Messmittel (13) kann bevorzugt in einer Radialrichtung (X,Y) außerhalb, insbesondere oberhalb des zweiten Werkstückteils (4) angeordnet sein.

Das zweite Messmittel (13) ist bevorzugt in Richtung der Rotationsachse (19) hinter der Stirnseite (Schweißbereich (5)) des zweiten Werkstückteils (4) und insbesondere hinter der Stirnseite der zweiten Spannvorrichtung (7) zurückversetzt angeordnet. Somit kann auch das zweite Messmittel (13) während der Durchführung einer Reibschweißung an der besagten Position verbleiben und eine Kollision mit dem ersten Werkstückteil (2) ist ausgeschlossen.

Eine Erfassung des Schweißbereichs (3) des ersten Werkstückteils (2) erfolgt bevorzugt derart, dass das erste Werkstückteil (2) mittels der ersten Spannvorrichtung (6) rotiert wird, während das zweite Messmittel (13) in Ruhe ist. Die Erfassung kann bevorzugt in der für die Herstellung der Reibschweißung vorgesehenen Einspannlage durchgeführt werden. Sie erfolgt bevorzugt automatisiert, insbesondere direkt vor Beginn einer Reibschweißung.

Die folgenden Ausführungen können je nach Ausbildung einer Reibschweißvorrichtung (1) für das erste Messmittel (8) (d.h. für eine Erfassung der Oberflächenbeschaffenheit und/oder des Rund- und/oder Planlaufs am zweiten Werkstückteil (4)) oder für das zweite Messmittel (13) (d.h. für eine Erfassung der Oberflächenbeschaffenheit und/oder des Rund- und/oder Planlaufs am ersten Werkstückteil (2)) oder für beide gemeinsam gelten.

Die Reibschweißvorrichtung (1) kann bevorzugt dazu ausgebildet sein, in Abhängigkeit von dem Ergebnis der Erfassung der Oberflächenbeschaffenheit und/oder des Plan- und/oder Rundlaufs zu entscheiden, ob eine Reibschweißung ausgeführt werden soll oder nicht. Es kann insbesondere vorgesehen sein, dass eine Reibschweißung nur bei Feststellung einer erforderlichen Güte der Oberflächenbeschaffenheit und oder des Plan- und/oder Rundlaufs ausgeführt wird. Hierdurch kann eine iO/niO-Kontrolle (in Ordnung / nicht in Ordnung) ausgeführt werden, wodurch Fehlschweißungen vermieden werden. Es kann somit verhindert werden, dass eine Reibschweißung ausgeführt wird, wenn eine minderwertige Ausbildung der Schweißstelle zu befürchten ist.

Es kann ferner vorgesehen sein, dass durch eine Korrektur der Lage des zweiten Werkstückteils (4) mit Bezug zur Rotationsachse (19) die erforderliche Güte des Rund- und/oder Planlaufs eingestellt bzw. nachgestellt werden kann. Hierzu kann vorgesehen sein, dass alternierend oder kontinuierlich durch eine Betätigung der Positioniervorrichtung (15) die Lage des zweiten Werkstückteils (4) angepasst wird, während dessen Schweißbereich (5) durch das erste Messmittel (8) vermessen wird. Das Nachstellen kann insbesondere durch eine Regelung erfolgen, der die aktuell durch das erste Messmittel (8) erfassten Werte als Ist-Größe zugeführt werden.

Bei einer Reibschweißvorrichtung (1), die ein erstes Messmittel (8) und ein zweites Messmittel (13) aufweist, kann bevorzugt parallel eine Messung der Oberflächenbeschaffenheit und/oder des Plan- und/oder Rundlaufs an dem ersten Werkstückteil (2) und dem zweiten Werkstückteil (4) erfolgen. Eine Drehung der ersten Spannvorrichtung (6) kann dabei gleichzeitig die für die Vermessung des zweiten Werkstückteils (4) erforderliche Rotation des ersten Messmittels (8) und die für die Vermessung des ersten Werkstückteils (2) erforderliche Rotation des Werkstückteils (2) bewirken. Das zweite Werkstückteil (4) und das zweite Messmittel (13) können während der Messung in Ruhe bleiben. Ggfs. kann während oder nach der Messung eine Korrektur der Lage des zweiten Werkstückteils (4) ausgeführt werden.

Das erste Messmittel (8) und/oder das zweite Messmittel (13) können bevorzugt eine Schutzvorrichtung aufweisen. Eine Schutzvorrichtung ist bevorzugt dazu ausgebildet, ein Messmittel (8,13) vor schädigenden Umwelteinflüssen wie Temperatureinwirkungen, Strahlungseinwirkungen und/oder Fremdkörpereinwirkungen (Schweißspritzer) zu schützen, die beispielsweise während der Herstellung einer Schweißverbindung entstehen können. Eine Schutzvorrichtung kann insbesondere einen Emitter- und/oder einen Detektorbereich eines Messmittels (8,13) verdecken und gegenüber Schweißspritzern oder fliegenden Spänen abschirmen. Alternativ kann eine Schutzvorrichtung in beliebiger anderer Weise ausgebildet sein.

Alle zu dem ersten Messmittel (8) genannten Ausbildungsmerkmale und deren Vorteile können auf das zweite Messmittel (13) übertragen werden und umgekehrt.

Bei der Reibschweißvorrichtung (1) sind außer den Messmitteln (8,13) auch der Drehantrieb (20) und die Vorschubeinrichtung (21) mit der Steuerung (17) verbunden. Der Drehantrieb (20) kann z.B. die erste Spannvorichtung (2) für den Messvorgang mit einer verminderten Geschwindigkeit drehen.

Die Reibschweißvorrichtung (1) kann voll automatisch arbeiten. Hierfür können z.B. die in Figur 1 angedeutete Ladeeinrichtung (18) und ggf. eine Nachbearbeitungsvorrichtung (24) vorgesehen sein, die ebenfalls mit der Steuerung (17) verbunden sind. Mit der Ladeeinrichtung (18) können voll automatisch zu schweißende Werkstückteile (2,4) zugeführt und in die Spannvorrichtungen (6,7) eingelegt werden. Desgleichen kann auch das fertig geschweißte Werkstück entnommen und abtransportiert werden. Mit der Ladeeinrichtung (18) können außerdem mangelhafte Werkstückteile (2,4) wieder aus der jeweiligen Spannvorrichtung (6,7) entnommen und ausgetauscht werden.

Bei kleineren Mängeln, z.B. Unebenheiten der Stirnfläche bzw. des Schweißbereichs (3,5) kann eine Nachbesserung erfolgen. Dies kann mittels der Nachbearbeitungsvorrichtung (24) geschehen, die ein geeignetes Werkzeug, z.B. einen Drehmeißel, einen Fräser oder ein sonstiges spanabhebendes Werkzeug, aufweist. Hierüber kann eine Stirnfläche geglättet und ggf. auch in ihrer Winkellage gegenüber der Rotationsachse (19) korrigiert werden.

Die vorbeschriebene Pressschweiß- und Erfassungstechnik kann nicht nur zur Erfassung und Prüfung der einzelnen Werkstückteile (2,4) vor dem Pressschweißen eingesetzt werden. Sie eignet sich auch für eine Prüfung und Erfassung nach dem Schweißprozess am fertig geschweißten Werkstück. Dabei können ein oder beide Stirnenden erfasst werden. Hierfür können die vorbeschriebenen ein oder mehreren Messmittel (8,13) oder auch andere und ggf. zusätzliche Messmittel eingesetzt werden. Beispielsweise kann nach dem Pressschweißprozess die Spannvorrichtung (6) geöffnet werden, wobei die andere, gegenüberliegende Spannvorrichtung (7) mit dem geschweißten Werkstück soweit zurückgefahren und distanziert werden kann, bis das Messmittel (8) an der rotierenden Spannvorrichtung (6) die zugewandte Stirnseite des fertigen Werkstücks in der vorbeschriebenen Weise erfassen und prüfen kann.

In einer anderen Variante kann die andere bzw. zweite Spannvorrichtung (7) geöffnet und zurückgefahren werden, wobei das zweite Messmittel (13) anschließend die Stirnseite des an der Spannvorrichtung (6) verbliebenen geschweißten Werkstücks bei dessen erneuter Rotation um die Drehachse (19) erfasst und dabei insbesondere den Plan- und/oder Rundlauf überprüft. In einer anderen Ausführungsform können separate und weitere Messmittel hierfür vorgesehen sein. Für die Überprüfung des fertigen Schweißteils kann es ebenfalls vorteilhaft sein, wenn auch die zweite Spannvorrichtung (7) einen steuerbaren Drehantrieb aufweist.

Abwandlungen und Weiterbildungen der erfindungsgemäßen Reibschweißvorrichtung sind in verschiedener Weise möglich. Insbesondere können die Merkmale der gezeigten und beschriebenen Ausführungsbeispiele in beliebiger Weise miteinander kombiniert, gegeneinander ersetzt, ergänzt oder weggelassen werden.

Bei einer abgewandelten Press- oder Reibschweißvorrichtung (1) kann nur eines der beiden gezeigten Messmittel (8,13) vorhanden sein. Alternativ kann die Zahl der Messmittel (8,9) größer sein. Das sog. erste Messmittel (8) kann in Variation der Ausführungsbeispiele am Maschinengestell (16) angeordnet sein und eine eigene Drehachse konzentrisch zur Rotationsachse (19) aufweisen. Der Sensor (23) kann dabei z.B. als umlaufender Lasersensor ausgebildet sein. In weiterer Variation ist es möglich, ein anderes alternatives oder zusätzliches Messmittel über oder neben den Werkstückteilen (2,4) anzuordnen, wobei dieses Messmittel eine quer zur Rotationsachse (19) ausgerichtete Erfassungsrichtung hat.

Ferner sind maschinentechnische Abwandlungen der Pressschweißvorrichtung (1) möglich. Diese kann in der vorerwähnten Weise als Schweißeinrichtung mit einem magnetisch bewegten und umlaufenden elektrischen Lichtbogen ausgebildet sein, z.B. gemäß der DE 37 13 418 A1. Statt der in Figur 1 gezeigten einfachen Reibschweißvorrichtung (1) mit zwei Spannvorrichtungen (6,7) kann eine sog. Doppelkopf-Reibschweißvorrichtung zum Einsatz kommen, die eine zentrale Spannvorrichtung für ein mittleres Werkstückteil und zwei hierzu beidseits angeordnete drehbare und linear verschiebliche Spannvorrichtungen für außenseitig anzuschweißende zweite und dritte Werkstückteile aufweist. Eine solche Doppelkopf-Reibschweißvorrichtung kann z.B. gemäß der WO 2006/002820 A2 ausgebildet sein. Im weiteren kann statt der in den Ausführungsbeispielen gezeigten fluchtenden und gleichachsigen Ausrichtung der zu verschweißenden Werkstückteile (2,4) eine gegenseitige Schräglage vorgesehen sein, wodurch z.B. an einem zentralen Achskörper beidseits Achsstummel mit schräger Ausrichtung zur Bildung eines Sturz- oder Spurwinkels in Schräglage angeschweißt werden. Eine solche Pressschweißeinrichtung kann z.B. entsprechend der EP 2 163 338 A1 ausgeführt sein.

### BEZUGSZEICHENLISTE

- 1: Pressschweißvorrichtung, Reibschweißvorrichtung
- 2: Werkstückteil
- 3: Schweißbereich
- 4: Werkstückteil
- 5: Schweißbereich
- 6: Spannvorrichtung rotierend
- 7: Spannvorrichtung verschieblich
- 8: Messmittel rotierend
- 9: Messstrahl
- 10: Datenübertragungsmittel, Sender
- 11: Datenübertragungsmittel, Empfänger
- 12: Energieversorgung
- 13: Messmittel verschieblich
- 14: Messstrahl
- 15: Positioniervorrichtung zur Achskorrektur
- 16: Maschinengestell
- 17: Steuerung
- 18: Ladeeinrichtung
- 19: Rotationsachse, Verschiebeachse
- 20: Drehantrieb
- 21: Vorschubeinrichtung
- 22: Grundkörper
- 23: Sensor
- 24: Nachbearbeitungsvorrichtung

- X: Erste Radialachse - Maschinen-Hochachse
- Y: Zweite Radialachse - Maschinen-Horizontalachse
- Z: Rotationsachse - Maschinen-Hauptachse

## Patentansprüche

1. Pressschweißvorrichtung mit einer Plastizierungseinrichtung und einer Staucheinrichtung zur Herstellung einer Schweißverbindung zwischen Werkstückteilen (2,4), wobei die Pressschweißvorrichtung eine um eine Rotationsachse (19) rotierbare Spannvorrichtung (6) mit einem Drehantrieb (20) für ein erstes Werkstückteil (2) und eine weitere Spannvorrichtung (7) für ein weiteres, insbesondere zweites Werkstückteil (4), sowie eine Vorschubeinrichtung (21) zur gegenseitigen Annäherung der Spannvorrichtungen (6,7) aufweist, **dadurch gekennzeichnet, dass** die Pressschweißvorrichtung (1) ein berührungslos messendes Messmittel (8,13) zur Erfassung der Oberflächenbeschaffenheit und/oder des Rundlaufs und/oder des Planlaufs an einem stirnseitigen Schweißbereich (3,5) eines Werkstückteils (2,4) aufweist.

2. Pressschweißvorrichtung nach Anspruch 1, **dadurch gekennzeichnet, dass** die Pressschweißvorrichtung (1) ein Messmittel (8) aufweist, das um die Rotationsachse (19) drehbar gelagert und zur Erfassung der Oberflächenbeschaffenheit und/oder des Rundlaufs und/oder des Planlaufs an einem stirnseitigen Schweißbereich (5) des gegenüber liegenden zweiten Werkstückteils (4) ausgebildet ist.

3. Pressschweißvorrichtung nach Anspruch 1 oder 2, **dadurch gekennzeichnet, dass** die Pressschweißvorrichtung (1) als Reibschweißvorrichtung und ihre Plastizierungseinrichtung als Reibeinrichtung ausgebildet ist oder die Pressschweißvorrichtung (1) als Schweißeinrichtung mit einem magnetisch bewegten Lichtbogen ausgebildet ist, wobei die Plastizierungseinrichtung als Zünd- und Treibeinrichtung für einen elektrischen Lichtbogen ausgebildet ist.

4. Pressschweißvorrichtung nach einem der vorhergehenden Ansprüche, **dadurch gekennzeichnet, dass** ein Messmittel (8) an der rotierbaren Spannvorrichtung (6), insbesondere an einem Grundkörper (22) der rotierbaren Spannvorrichtung (6) stirnseitig oder umfangseitig angeordnet, vorzugsweise in den Grundkörper (22) integriert, ist.

5. Pressschweißvorrichtung nach einem der vorhergehenden Ansprüche, **dadurch gekennzeichnet, dass** die Pressschweißvorrichtung (1) ein weiteres Messmittel (13) zur Erfassung der Oberflächenbeschaffenheit und/oder des Rundlaufs und/oder des Planlaufs an einem stirnseitigen Schweißbereich (3) des ersten Werkstückteils (2) aufweist.

6. Pressschweißvorrichtung nach einem der vorhergehenden Ansprüche, **dadurch gekennzeichnet, dass** das weitere Messmittel (13), insbesondere ein berührungslos messender Sensor (23), an der zweiten Spannvorrichtung (7) angeordnet ist, die in Richtung der Rotationsachse (19) verschieblich gelagert und angetrieben ist.

7. Pressschweißvorrichtung nach einem der vorhergehenden Ansprüche, **dadurch gekennzeichnet, dass** die Pressschweißvorrichtung (1) eine automatische Ladeeinrichtung (18) zum Zuführen der einzelnen Werkstückteile (2,4) und zum Abführen des geschweißten Werkstücks sowie angetriebene und mit der Steuerung (17) verbundene Spannvorrichtungen (6,7), insbesondere Spannfutter oder Zentrumspanner, aufweist.

8. Pressschweißvorrichtung nach einem der vorhergehenden Ansprüche, **dadurch gekennzeichnet, dass** die Pressschweißvorrichtung (1) eine Positioniervorrichtung (15) zur Korrektur einer Lage eines Werkstückteils (2,4) mit Bezug zur Rotationsachse (19) und/oder eine Nachbearbeitungsvorrichtung (24) für ein Werkstückteil (2,4) aufweist.

9. Verfahren zur Herstellung einer Schweißverbindung zwischen Werkstückteilen (2,4) mittels Plastifizieren und Stauchen der gespannten Werkstückteile (2,4), wobei ein erstes Werkstückteil (2) um eine Rotationsachse (19) drehend angetrieben wird und die Werkstückteile (2,4) mittels einer Vorschubeinrichtung (21) gegenseitig axial angenähert werden, **dadurch gekennzeichnet, dass** mit einem berührungslos messenden Messmittel (8,13) die Oberflächenbeschaffenheit und/oder der Rundlauf und/oder der Planlauf an einem stirnseitigen Schweißbereich (3,5) eines Werkstückteils (2,4) erfasst wird.

10. Verfahren nach Anspruch 9, **dadurch gekennzeichnet, dass** zur Erfassung der Oberflächenbeschaffenheit und/oder des Rundlaufs und/oder des Planlaufs an einem stirnseitigen Schweißbereich (3,5) eines Werkstückteils (2,4) mit einem um die Rotationsachse (19) rotierenden Sensor (23), insbesondere einem Lasersensor, der Abstand zu diesem stirnseitigen Schweißbereich (3,5) des gegenüber liegenden Werkstückteils (2,4) gemessen wird.

11. Verfahren nach Anspruch 9 oder 10, **dadurch gekennzeichnet, dass** die Erfassung der Oberflächenbeschaffenheit und/oder des Rundlaufs und/oder des Planlaufs an einem stirnseitigen Schweißbereich (3,5) in der für die Herstellung der Pressschweißung vorgesehenen Einspannlage des oder der Werkstückteile (2,4), insbesondere direkt vor Beginn einer Pressschweißung, durchgeführt wird.

12. Verfahren nach Anspruch 9, 10 oder 11, **dadurch gekennzeichnet, dass** die Erfassung der Oberflächenbeschaffenheit und/oder des Rundlaufs und/oder des Planlaufs automatisch ausgeführt wird.

13. Verfahren nach einem der Ansprüche 9 bis 12, **dadurch gekennzeichnet, dass** eine Pressschweißung nur bei Feststellung einer erforderlichen Güte der Oberflächenbeschaffenheit und/oder des Rundlaufs und/oder des Planlaufs ausgeführt wird.

14. Verfahren nach einem der Ansprüche 9 bis 13, **dadurch gekennzeichnet, dass** anhand der Messergebnisse eines Messmittels (8,13) eine Korrektur der Lage eine Werkstückteils (2,4) und/oder eine Nachbearbeitung eines Werkstückteils (2,4) automatisch ausgeführt wird.

15. Verfahren nach einem der Ansprüche 9 bis 14, **dadurch gekennzeichnet, dass** das pressgeschweißte Werkstück an ein oder beiden Stirnenden mit dem Messmittel (8,13) auf Rundlauf und/oder Planlauf überprüft wird.

## Claims

1. Pressure welding device, having a plastification installation and a compression installation, for producing a welded connection between workpiece parts (2, 4), wherein the pressure welding device has a clamping device (6) that is rotatable about a rotation axis (19), and has a rotary drive (20) for a first workpiece part (2), and a further clamping device (7) for a further, in particular a second, workpiece part (4), and an indexing installation (21) for mutually converging the clamping devices (6, 7), **characterized in that** the pressure welding device (1) for detecting the surface quality and/or the true running and/or the axial runout in a front-end welding region (3, 5) of a workpiece part (2, 4) has a measuring means (8, 13) that measures in a non-contacting manner.

2. Pressure welding device according to Claim 1, **characterized in that** the pressure welding device (1) has a measuring means (8) which is mounted so as to be rotatable about the rotation axis (19) and is configured for detecting the surface quality and/or the true running and/or the axial runout in a front-end welding region (5) of the opposite second workpiece part (4).

3. Pressure welding device according to Claim 1 or 2, **characterized in that** the pressure welding device (1) is configured as a friction welding device, and the plastification device of the former is configured as a friction installation, or the pressure welding device (1) is configured as a welding installation having a magnetically moved arc, wherein the plastification installation is configured as the igniting and driving installation for an electric arc.

4. Pressure welding device according to one of the preceding claims, **characterized in that** a measuring means (8) is disposed on the front end or on the circumference on the rotatable clamping device (6), in particular on a main body (22) of the rotatable clamping device (6), said measuring means (8) preferably being integrated in the main body (22).

5. Pressure welding device according to one of the preceding claims, **characterized in that** the pressure welding device (1) has a further measuring means (13) for detecting the surface quality and/or the true running and/or the axial runout in a front-end welding region (3) of the first workpiece part (2).

6. Pressure welding device according to one of the preceding claims, **characterized in that** the further measuring means (13), in particular a sensor (23) that measures in a non-contacting manner, is disposed on the second clamping device (7) which is mounted and driven so as to be displaceable in the direction of the rotation axis (19).

7. Pressure welding device according to one of the preceding claims, **characterized in that** the pressure welding device (1) for infeeding the individual workpiece parts (2, 4) and for discharging the welded workpiece has an automatic loading installation (18), and clamping devices (6, 7), in particular collet chucks or self-centring vises, that are driven and connected to the controller (17).

8. Pressure welding device according to one of the preceding claims, **characterized in that** the pressure welding device (1) has a positioning device (15) for correcting a position of a workpiece part (2, 4) in relation to the rotation axis (19), and/or a post-machining device (24) for a workpiece part (2, 4).

9. Method for producing a welded connection between workpiece parts (2, 4) by means of plastification and compression of the clamped workpiece parts (2, 4), wherein a first workpiece part (2) is rotatingly driven about a rotation axis (19), and the workpiece parts (2, 4) are mutually converged in an axial manner by means of an indexing installation (21), **characterized in that** the surface quality and/or the true running and/or the axial runout in a front-end welding region (3, 5) of a workpiece part (2, 4) is detected by way of a measuring means (8, 13) that measures in a non-contacting manner.

10. Method according to Claim 9, **characterized in that** for detecting the surface quality and/or the true running and/or the axial runout on a front-end welding region (3, 5) of a workpiece part (2, 4), the spacing of the opposite workpiece part (2, 4) from this front-end welding region (3, 5) is measured by way of a sensor (23), in particular a laser sensor, which relates about the rotation axis.

11. Method according to Claim 9 or 10, **characterized in that** the detection of the surface quality and/or the true running and/or the axial runout in a front-end welding region (3, 5) is carried out in the clamping position of the workpiece part or parts (2, 4) that is envisaged for the production of the pressure weld, in particular directly prior to the commencement of pressure welding.

12. Method according to Claim 9, 10, or 11, **characterized in that** the detection of the surface quality and/or the true running and/or of the axial runout is carried out automatically.

13. Method according to one of Claims 9 to 12, **characterized in that** pressure welding is only carried out upon establishment of a necessary grade of the surface quality and/or of the true running and/or of the axial runout.

14. Method according to one of Claims 9 to 13, **characterized in that** a correction of the position of a workpiece part (2, 4) and/or post-machining of a workpiece part (2, 4) is automatically carried out by means of the measured results of a measuring means (8, 13).

15. Method according to one of Claims 9 to 14, **characterized in that** the pressure-welded workpiece by way of the measuring means (8, 13) is checked for true running and/or axial runout at one or both front ends.

## Revendications

1. Dispositif de soudage par pression doté d'un dispositif de plastification et d'un dispositif de compression pour la réalisation d'un assemblage soudé entre des parties de pièces (2, 4), dans lequel le dispositif de soudage par pression présente un dispositif de serrage (6) pouvant tourner autour d'un axe de rotation (19) avec un entraînement rotatif (20) pour une première partie de pièce (2) et un autre dispositif de serrage (7) pour une autre, en particulier une deuxième, partie de pièce (4), ainsi qu'un dispositif d'avance pour le rapprochement mutuel des dispositifs de serrage (6, 7), **caractérisé en ce que** le dispositif de serrage par pression (1) présente un moyen de mesure mesurant sans contact (8, 13) pour la détection de la nature de la surface et/ou de la concentricité et/ou de la voilure axiale sur une zone de soudage frontale (3, 5) d'une partie de pièce (2, 4).

2. Dispositif de soudage par pression selon la revendication 1, **caractérisé en ce que** le dispositif de soudage par pression (1) présente un moyen de mesure (8), qui est monté de façon rotative autour de l'axe de rotation (19) et qui est configuré pour détecter la nature de la surface et/ou la concentricité et/ou la voilure axiale sur une zone de soudage frontale (5) de la deuxième partie de pièce opposée (4).

3. Dispositif de soudage par pression selon la revendication 1 ou 2, **caractérisé en ce que** le dispositif de soudage par pression (1) est réalisé sous la forme d'un dispositif de soudage par friction et son dispositif de plastification est réalisé sous la forme d'un dispositif de friction ou le dispositif de soudage par pression (1) est réalisé sous la forme d'un dispositif de soudage pourvu d'un arc électrique déplacé magnétiquement, dans lequel le dispositif de plastification est réalisé sous la forme d'un dispositif d'allumage et de déplacement pour un arc électrique.

4. Dispositif de soudage par pression selon l'une quelconque des revendications précédentes, **caractérisé en ce qu'**un moyen de mesure (8) est disposé frontalement ou en périphérie sur le dispositif de serrage rotatif (6), en particulier sur un corps de base (22) du dispositif de serrage rotatif (6), et est de préférence intégré dans le corps de base (22).

5. Dispositif de soudage par pression selon l'une quelconque des revendications précédentes, **caractérisé en ce que** le dispositif de soudage par pression (1) présente un autre moyen de mesure (13) pour détecter la nature de la surface et/ou la concentricité et/ou la voilure axiale sur une zone de soudage frontale (3) de la première partie de pièce (2).

6. Dispositif de soudage par pression selon l'une quelconque des revendications précédentes, **caractérisé en ce que** l'autre moyen de mesure (13), en particulier un capteur mesurant sans contact (23), est disposé sur le deuxième dispositif de serrage (7), qui est monté de façon déplaçable dans la direction de l'axe de rotation (19) et qui est entraîné.

7. Dispositif de soudage par pression selon l'une quelconque des revendications précédentes, **caractérisé en ce que** le dispositif de soudage par pression (1) présente un dispositif de chargement automatique (18) pour amener les parties de pièces individuelles (2, 4) et pour évacuer la pièce soudée ainsi que des dispositifs de serrage (6, 7) entraînés et reliés à la commande (17), en particulier des mandrins de serrage ou des moyens de serrage centraux.

8. Dispositif de soudage par pression selon l'une quelconque des revendications précédentes, **caractérisé en ce que** le dispositif de serrage par pression (1) présente un dispositif de positionnement (15) pour la correction d'une position d'une partie de pièce (2, 4) par rapport à l'axe de rotation (19) et/ou un dispositif de ré-usinage (24) pour une partie de pièce (2, 4).

9. Procédé de réalisation d'un assemblage soudé entre des parties de pièces (2, 4) au moyen d'une plastification et d'une compression des parties de pièces serrées (2, 4), dans lequel on entraîne une première partie de pièce (2) en rotation autour d'un axe de rotation (19) et on approche axialement l'une de l'autre les parties de pièces (2, 4) au moyen d'un dispositif d'avance (21), **caractérisé en ce que** l'on détecte avec un moyen de mesure mesurant sans contact (8, 13) la nature de la surface et/ou la concentricité et/ou la voilure axiale sur une zone de soudage frontale (3, 5) d'une partie de pièce (2, 4).

10. Procédé selon la revendication 9, **caractérisé en ce que** pour détecter la nature de la surface et/ou la concentricité et/ou la voilure axiale sur une zone de soudage frontale (3, 5) d'une partie de pièce (2, 4) avec un capteur (23), en particulier un capteur à laser, tournant autour de l'axe de rotation (19), on mesure la distance à cette zone de soudage frontale (3, 5) de la partie de pièce opposée (2, 4).

11. Procédé selon la revendication 9 ou 10, **caractérisé en ce que** l'on effectue la détection de la nature de la surface et/ou de la concentricité et/ou de la voilure axiale sur une zone de soudage frontale (3, 5) dans la position de serrage de la ou des partie (s) de pièce(s) prévue pour la réalisation de l'assemblage soudé, en particulier directement avant le commencement d'un soudage par pression.

12. Procédé selon la revendication 9, 10, ou 11, **caractérisé en ce que** l'on effectue la détection de la nature de la surface et/ou de la concentricité et/ou de la voilure axiale de manière automatique.

13. Procédé selon l'une quelconque des revendications 9 à 12, **caractérisé en ce que** l'on n'effectue un assemblage soudé qu'en cas de constatation d'une qualité nécessaire de la nature de la surface et/ou de la concentricité et/ou de la voilure axiale.

14. Procédé selon l'une quelconque des revendications 9 à 13, caractérisé en ce l'on effectue automatiquement, à l'aide des résultats de mesure d'un moyen de mesure (8, 13), une correction de la position d'une partie de pièce (2, 4) et/ou un ré-usinage d'une partie de pièce (2, 4).

15. Procédé selon l'une quelconque des revendications 9 à 14, **caractérisé en ce que** l'on contrôle la pièce soudée par pression sur une ou sur les deux extrémité(s) frontale(s) avec le moyen de mesure (8, 13) pour la concentricité et/ou la voilure axiale.
